# EUROPEAN PATENT SPECIFICATION

(11) **EP 3 671 614 B1**
(45) Date of publication and mention of the grant of the patent: **25.03.2026**
(21) Application number: 18213763.8
(22) Date of filing: 18.12.2018
(51) Int. Cl.: G06Q 40/02, G06Q 30/00, G06Q 20/24, G06Q 20/40

(54) **COMPUTER SECURITY DEVICE**
COMPUTERSICHERHEITSVORRICHTUNG
DISPOSITIF DE SÉCURITÉ INFORMATIQUE

(43) Date of publication of application: 24.06.2020
(73) Proprietor: Mastercard International Incorporated, Purchase NY 10577 (US)
(72) Inventor: VANNESTE, Paul, 1340 Ottignies (BE); ROUQUET, Jean-Louis, 6210 Les Bons Villers (BE)
(74) Representative: Richardson, Mark Jonathan

(56) References cited:
- EP-A1- 3 021 225
- WO-A2-2008/014507
- US-A1- 2004 073 445
- US-A1- 2008 016 565
- US-A1- 2009 106 151
- US-A1- 2015 039 513
- US-A1- 2017 169 432
- US-A1- 2018 081 787
- LOPEZ-ROJAS EDGAR ALONSO: "Applying Simulation to the Problem of Detecting Financial Fraud", 1 January 2016 (2016-01-01), XP093099770, ISBN: 978-91-7-295329-1, Retrieved from the Internet <URL:https://www.diva-portal.org/smash/get/diva2:955852/FULLTEXT06.pdf> [retrieved on 20231109]

## Description

### Field of Invention

The present invention relates to a computer security device. In particular, the present invention relates to a computer security device for electronic authorisation systems such as those used for payment transactions. The invention extends to a method of operating a computer security device.

### Background to the invention

The present invention relates to the field of computer security for electronic authorisation systems used for payment transactions. US 2008/016565 A1 describes a compliance assessment and security assessment process for smart card products that requires a set of security guidelines to be maintained. US 2017/169432 A1 relates to a method of analysing transactions that occur at a merchant by looking at both historical transaction data and historical account holder transaction data in order to score the merchant and account holder to identify a particular type of fraud transaction. US 2018/081787 A1 describes a virtual payments environment used to simulate and evaluate the performance of a payments system.

A payment card scheme - a payment network linked to a payment card - is typically based one of two models: a three-party model (adopted by American Express) or a four-party model (adopted by Visa and Mastercard). One of the objectives of the present disclosure is to provide a system and method for detecting vulnerabilities within the authorisation processing systems within the four-party model, wherein the relevant parties in the four-party model include a merchant, an acquirer, an issuer and a cardholder. Typically, the four party model of a credit card or debit card purchase involves an exchange of authorisation request and response messages between the parties prior to the settlement of funds between the cardholder and the merchant. The messages may include transaction data such as a primary account number, a transaction amount, a merchant identifier, and a date and time of the transaction.

The physical payment card is sent to the user by an issuer, typically a financial institution with whom the user has an account. The user may use the card to make payment transactions at point of sale devices located at merchants. The point of sale device reads the data held on the physical card, either on the magnetic stripe or, if the card is of the 'chip and pin' type (or "chip and signature"), a chip integrated within the card, and generates a financial transaction. In this context the financial transaction may be a payment transaction seeking authorization for the amount of the transaction. The payment transaction is communicated by the merchant to a merchant acquirer which then routes the payment transaction to the issuer via the transaction processing entity for authorization. The issuer then carries out a series of checks to determine whether the user's credit is sufficient and to identify possible fraudulent transactions. If the checks are positive, the issuer then sends an appropriate authorization back to the acquirer to complete the authorization stage of the payment transaction.

Payment cards such as credit cards and debit cards are very widely used for all forms of financial transaction. The use of payment cards has evolved significantly with technological developments over recent years. Many payments are made at a retail location, typically with a physical transaction card interacting with a point of sale (POI) terminal to perform a transaction. These transaction cards may interact with a POI by swiping through a magnetic stripe reader, or for a "chip card" or "smart card" by direct contact with a smart card reader (under standard ISO/IEC 7816) or by contactless interaction through local short range wireless communication (under standard ISO/IEC 14443).

It is also possible to use a computing device such as a mobile telephone as a proxy for a payment card. For example, the mobile payment application, M/Chip Mobile, can be downloaded to a mobile cellular telephone handset (hereafter "mobile phone") to act as a proxy for a payment card using Near Field Communication (NFC) technology standards, which are built in to the majority of current mobile phones. NFC is a development upon RFID, and NFC-enabled devices are able to operate in the same manner as RFID devices - though an NFC-device is active rather than passive, as it is powered by the mobile phone battery rather than relying on inductive pickup from a reader device. Using M/Chip Mobile, a user can conduct tapping based-transactions with a proximity reader, as well as perform account management operations over an appropriate network interface (cellular, local wireless network) in an online banking interface with the user's account provider.

Other mobile payment applications and associated services exist, typically having a similar functionality and potentially incorporating similar solutions. Examples are Apple Pay (operating on iOS devices) and Google Wallet (operating on Android devices).

The authorisation of a payment transaction via a contactless device or via smartphone based device is broadly similar to the process described above in relation to a payment card.

In the following description a "transaction device" is a payer device that may take many forms, e.g. payment card, a smartcard or another form factor like a mobile communications device, keyfob, etc. The functional blocks that make up a transaction device may be distributed; so part or all of the device may be implemented in the cloud.

Parties within a payment network will configure their authorisation processing systems such that they do not have any security vulnerability issues arising from: configuration issues, incomplete system implementation issues; or, software coding errors. However, it may be necessary to expend significant time and effort configuring a processing system and maintaining the correct configuration of the authorisation processing system..

The present disclosure has been devised to mitigate or overcome at least some of the above-mentioned problems.

### Statements of Invention

According to a first aspect of the present invention there is provided a computer security device for detecting security vulnerabilities in a transaction processing system, the device comprising: an input arranged to receive configuration data relating to the transaction processing system; a communications interface arranged to output transaction authorisation request messages for processing by the transaction processing system and to receive authorisation response messages from the transaction processing system; a processor arranged to: analyse the received configuration data relating to the transaction processing system and to determine one or more fraudulent transaction types that the transaction processing system is potentially vulnerable to; generate one or more transaction authorisation request messages emulating the determined one or more fraudulent transaction types; output the one or more generated transaction authorisation request messages via the communications interface to the transaction processing system; analyse any authorisation response messages from the transaction processing system received via the communications interface to identify the presence of security vulnerability issues in the transaction processing system.

Security vulnerability issues that may be identified by the system may include one or more security vulnerability issues arising from: configuration issues, incomplete system implementation issues; and, software coding errors.

The computer security device according to the present invention may be installed within a transaction processing network. In particular, the computer security device may be installed and run within the local environment of an issuer (the transaction processing system). The computer security device may be a hardware device or may alternatively be a software element that is installed in the issuer systems. The computer security device may also be installed within a payment card network (e.g. the Mastercard network).

The computer security device is arranged to receive configuration data relating to the transaction processing system and, on the basis of such data, to determine one or more fraudulent transaction types that the transaction processing system could potentially be vulnerable to. The received configuration data relating to the transaction processing system may be received by scanning a transaction device (such as a transaction card, a keyfob device with transaction capabilities, smart mobile device, wristband device with transaction capabilities, smartwatch or other suitable transaction device) or may be received from a system resource or from a user in response to a request for such data. The configuration data may be derived from historical transaction data supplied from the transaction processing system.

The processor of the computer security device is arranged to generate one or more transaction authorisation request messages (e.g. the processor may generate messages that generally correspond to the type of transaction messages that are exchanged within a payment network while processing authentic transaction). These messages may be arranged to emulate the potential fraudulent attacks that the transaction processing system may be susceptible to. Any authorisation response messages received from the transaction processing system may then be analysed to identify the presence of security vulnerability issues within the transaction processing system.

The processor may be arranged to analyse received authorisation response messages in order to determine if the transaction processing system is exposed to a potential fraud attack based on each emulated fraudulent transaction type.

Optionally, the input is arranged to receive data from a transaction device that has been read by a transaction device reader. The received data may comprise data related to an Application Interchange Profile (AIP) or an Application Usage Control (AUC) associated with an EMV (Europay-Mastercard-VISA) transaction device. The processor may be arranged to determine transaction processing system functionality supported by the transaction device, such functionality being indicative of the configuration details of the transaction processing system.

Optionally, the processor is arranged to use data generated by the transaction device to generate the one or more transaction authorisation request messages. The computer security device may further comprise a further communications interface arranged to exchange data with the transaction device and the processor may be arranged to communicate with the transaction device in order to generate transaction data for use in generating the one or more transaction authorisation request messages.

The transaction authorisation request messages generated by the processor may be arranged to: (i) emulate one or more of: magnetic stripe transactions; magnetic stripe contactless transactions; EMV contact transactions; contactless transactions of card-not-present transactions; and/or (ii) mimic messages originating from one or more of: an automatic cash machine (ATM); an attended point-of-sale (POS) terminal; an unattended POS terminal; a merchant website; and/or (iii) emulate one of more of the following fraud patterns: counterfeit transaction device; wedge attacks; pre-play attacks; replay attacks; cross-contamination; fraudster-induced exception processing.

It is noted that "attended terminals" are terminals operated under the control of a human operator appointed by a merchant - this has security implications: such terminals are typically these where signature-based transactions can be accepted, holograms can be checked, etc. Unattended terminals are cardholder-operated. These 2 types of terminals may have different characteristics of their authorization messages, and therefore may call for different fraud patterns, e.g. for fraudster-induced exception processing.

The processor may be arranged to construct a vulnerability assessment report based on analysed received authorisation response messages, the vulnerability report comprising all the identified configuration issues within the transaction processing system.

Where the security vulnerability issues comprises a configuration issue, the processor may be arranged to generate a configuration control signal for controlling the transaction processing system, the control signal arranged to update configuration settings of the transaction processing system to remove an identified configuration issue and the communications interface is arranged to output the configuration control signal to the transaction processing system. Conveniently, in the event that the computer security device identifies a configuration issue at the transaction processing system, the computer security device may output a control signal to address the identified issues by updating the configuration settings of the transaction processing system.

The processor may be arranged to generate a control signal arranged to control the transaction control system such that transactions corresponding to security vulnerabilities are rejected until the configuration settings of the transaction processing system have been updated. In the event that the computer security device identifies a configuration issue at the transaction processing system, the computer security device may output a control signal that blocks (rejects) any transactions that correspond to an identified security vulnerability.

The processor may be arranged to generate a request to the transaction processing system to supply historical transaction data that has been processed by the transaction processing system and the processor may be arranged to generate one or more transaction authorisation request messages by modifying the received historical transaction data.

Optionally, the processor is arranged to a plurality of transaction authorisation request messages to emulate a plurality of determined one or more fraudulent transaction types.

According to an aspect of the present invention there is provided a method for detecting security vulnerabilities in a transaction processing system, the method comprising: receiving configuration details relating to the transaction processing system; analysing, in a processor, the received configuration details of the transaction processing system and determining one or more fraudulent transaction types that the transaction processing system is potentially vulnerable to; generating, in the processor, one or more transaction authorisation request messages emulating the determined one or more fraudulent transaction types; outputting via the communications interface, the one or more generated transaction authorisation request messages to the transaction processing system; receiving, via the communications interface, authorisation response messages from the transaction processing system; analysing received authorisation response messages to identify the presence of security vulnerability issues in the transaction processing system.

The invention extends to a carrier medium for carrying a computer readable code for controlling a computer (computer security device) to carry out the above method of the invention.

The invention extends to a non-transitory computer-readable storage medium storing executable computer program instructions implementing the above method aspect of the invention.

According to an aspect of the present invention there is provided a transaction processing system comprising a computer security device according to the above computer security device aspect of the present invention.

According to an aspect of the present invention there is provided a transaction device payment network arranged to route transaction messages between a merchant and a transaction processing system, the network comprising a computer security device according to the computer security device aspect of the present invention.

According to an aspect of the present invention there is provided a computer security device for detecting security vulnerabilities in a transaction processing system, the device comprising: an input arranged to receive configuration data relating to the transaction processing system; a communications interface arranged to output transaction authorisation request messages for processing by the transaction processing system and to receive authorisation response messages from the transaction processing system; a processor arranged to: analyse the received configuration details of the transaction processing system and to determine one or more fraudulent transaction types that the transaction processing system is potentially vulnerable to; generate one or more transaction authorisation request messages emulating the determined one or more fraudulent transaction types; output the one or more generated transaction authorisation request messages via the communications interface to the transaction processing system.

Authorisation response messages received from the transaction processing system via the communications interface may be analysed to identify the presence of security vulnerability issues in the transaction processing system. Such analysis may be undertaken by the computer security device or may be undertaken by a separate processor located within the transaction payment network, e.g. within a third party back office system that may be arranged to receive authorisation messages and to analyse such messages. The third party system may generate a report of the security status of the transaction processing system.

The third party system may also feedback security vulnerability information to the computer security device so that it can take appropriate action. Therefore, the computer security device may receive data relating to identified configuration issues in the transaction processing system and the processor may generate a configuration control signal for controlling the transaction processing system, the control signal arranged to update configuration settings of the transaction processing system to remove an identified configuration issue and the communications interface is arranged to output the configuration control signal to the transaction processing system.

The processor may be also or alternatively be arranged to generate a control signal arranged to control the transaction control system such that transactions corresponding to security vulnerabilities are rejected until the configuration settings of the transaction processing system have been updated.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment or claim can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of Figures

Embodiments of the invention will now be described, by way of example, with reference to the accompanying Figures, of which:
Figure 1 shows a schematic representation of a payment system;
Figure 2 shows a computer security device according to an embodiment of the present invention;
Figure 3 shows a method of operating a computer security device according to an embodiment of the present invention;
Figure 4 shows a schematic of part of a payment system incorporating a computer security device according to Figure 2.

### Detailed Description

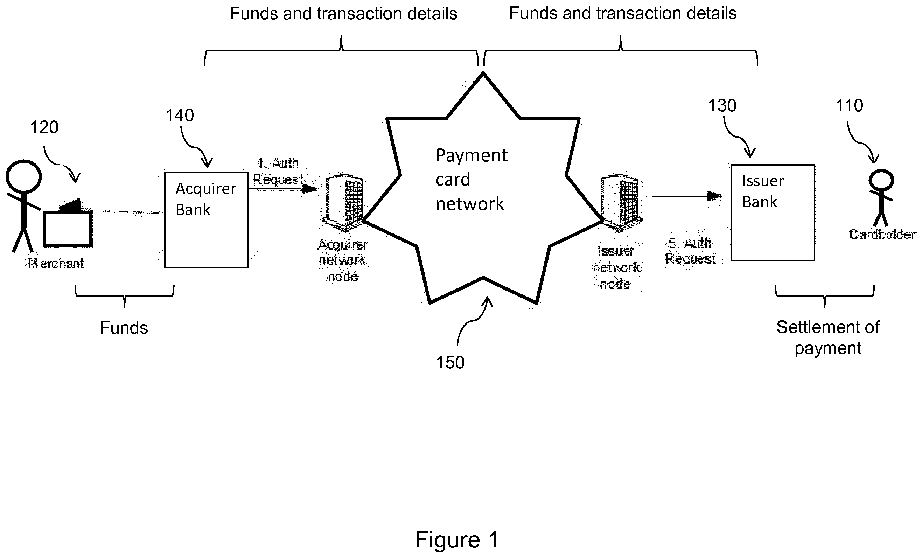

Figure 1 is a schematic diagram of a typical four-party model or four-party payment transaction scheme. The diagram illustrates the entities present in the model and the interactions occurring between entities. It is noted however that the systems and methods according to embodiments of the present invention relate to the discovery of vulnerabilities in an electronic authorisation system and, as such, may be deployed/used in alternative payment transaction system arrangements.

Normally, card schemes - payment networks linked to transaction devices (including payment cards) - are based on one of two models: a three-party model (adopted by American Express) or a four-party model (adopted by Visa and Mastercard). For the purposes of this document, the four-party model 100 is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the transaction device to the cardholder 110. The acquirer 140 provides services for transaction device processing to the merchant 120.

The model also comprises a central payment card network 150 - interactions between the issuer 130 and the acquirer 140 are routed via the payment card network 150. The payment card network 150 enables a merchant 120 associated with one particular bank (acquirer 140) to accept payment transactions from a cardholder 110 associated with a different bank (issuer 130).

A typical transaction between the entities in the four-party model can be divided into two main stages: authorisation and settlement. The cardholder 110 initiates a purchase of a good or service from the merchant 120 using their transaction device (e.g. a payment card). Details of the transaction device and the transaction are sent to the issuer 130 via the acquirer 140 and the payment card network 150 to authorise the transaction. Should the transaction be considered abnormal by the issuer 130, the cardholder 110 may be required to undergo a verification process to verify their identity and the details of the transaction. Once the verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the payment card network 150. Upon receipt of these transaction details, the issuer 130 provides the settlement funds to the payment card network 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

Systems and methods are described herein for evaluating payment transaction systems for vulnerabilities that may be exploited for fraudulent purposes.

At least some known credit/debit transaction device purchases involve the exchange of a number of network messages (relating to the transaction device such as a payment card) between the merchant, acquirer, and issuer parties of the above described four-party interchange model. Such messages may include authorizations, advices, reversals, account status inquiry presentments, purchase returns, and chargebacks. The credit or debit transaction device payment transaction messages may include several transaction attributes, such as, for example, primary account number (either real or virtual), transaction amount, merchant identifier, acquirer identifier (the combination of which with above uniquely identifies a merchant), transaction date-time, and address verification.

In some situations such as in-store credit card purchases, the issuer of the transaction device typically assumes liability for certain aspects of the transaction, such as chargebacks. In other situations, such as online transactions through a merchant web site, the merchant party in the transaction assumes initial liability for certain aspects of the transaction unless, for example, certain risk-mitigating steps are taken, such as an authentication step.

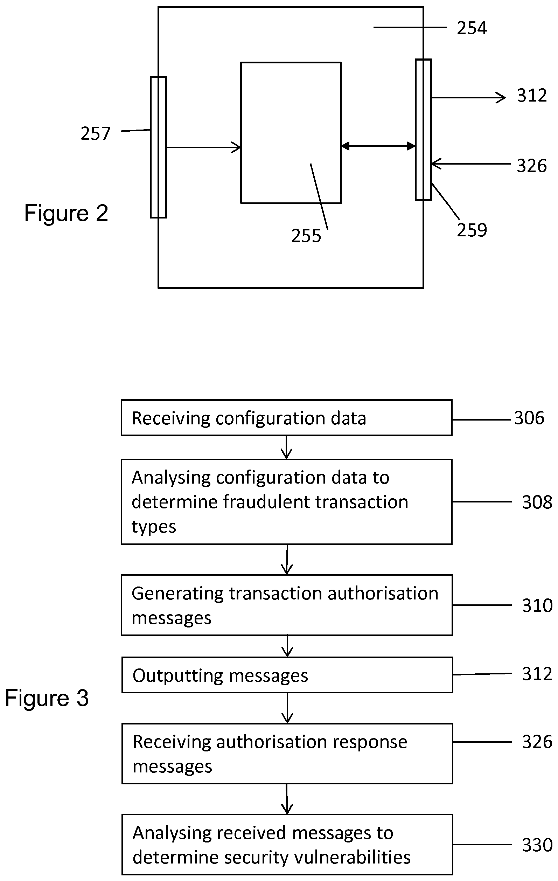

Figure 2 shows a computer security device 254 in accordance with embodiments of the present invention. The device 254 comprises an input 257 for receiving configuration data relating to a transaction processing system, a processor 255 and a communications interface 259 for sending transaction authorisation request messages and receiving authorisation response messages from the transaction processing system.

Figure 3 shows a method of operating the computer security device 254 of Figure 2 in order to determine security vulnerabilities of a transaction processing system.

In step 306, configuration data relating to the transaction processing system is received at the input 257. The received configuration data is analysed in step 308 by the processor 255 in order to determine the potential fraudulent transaction types that the transaction processing system could be vulnerable to if it has been misconfigured. In step 310 a number of transaction authorisation request messages are generated by the processor 255. These messages are designed to emulate the messages that would be sent by a fraudulent attacking entity trying to exploit the transaction processing system.

In step 312 the messages generated by the processor 255 are output to the transaction processing system via the communications interface 259.

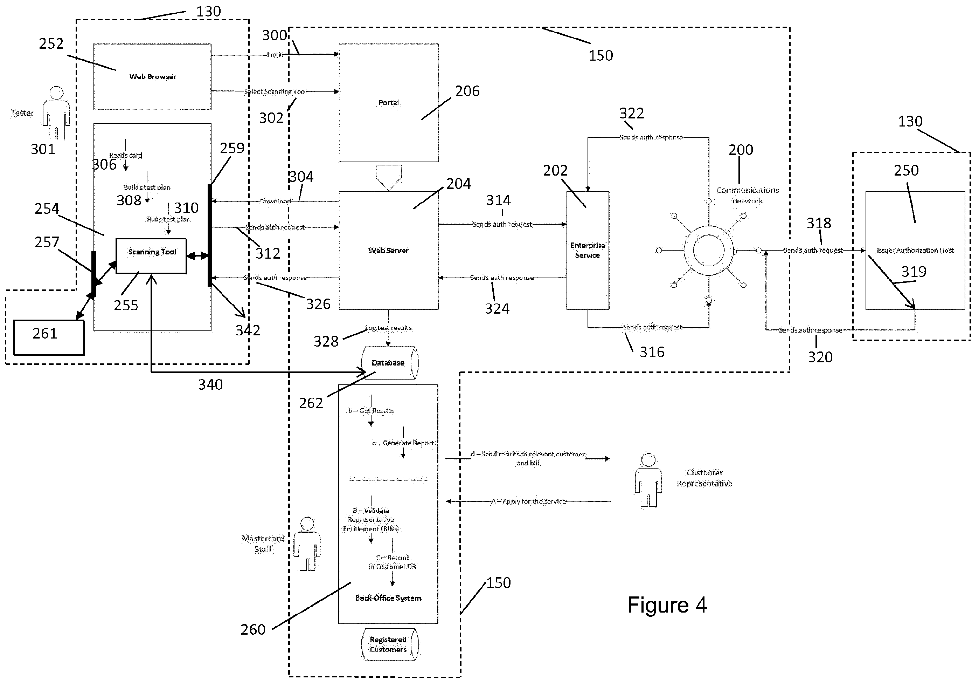

It is noted that the transaction authorisation messages may not be directly output to the transaction processing system and may travel via an intermediate system. For example, the computer security device 254 may be installed within the transaction processing system itself. The transaction authorisation messages may therefore be output to a central payment network (e.g. network 150 from Figure 1) to be processed in the same manner as normal transaction messages and may subsequently re-enter the transaction processing system 130. This is described in more detail in Figure 4 below.

Authorisation response messages may be received at the communications interface 259 in step 326 and these may be analysed in step 330 to determine the presence of security vulnerability issues (e.g. arising from configuration issues, software coding issues, incomplete system implementation issues).

Figure 4 shows part of a transaction network which incorporates a computer security device according to an embodiment of the present invention.

Figure 4 shows hardware elements of the payment card network 150 and issuer bank system 130 in Figure 1 in more detail.

[It is noted that in the following description the computer security device is shown located within the issuer bank system 130 and being arranged to interact with the payment card network. It will be appreciated by the skilled person that the computer security device could alternatively be integrated into the payment card network 150.]
The payment card network 150 comprises a communications network 200 which is arranged to work out the issuer bank entity 130 for any transactions received from a merchant banking entity and to send the received transactions to the appropriate issuer entity 130.

As shown in Figure 4, the payment card network 150 further comprises an enterprise service 202 a web server 204 and a portal 206. The communications network 200 is in communication with the enterprise service 202 which acts as a doorway to the communications network 200.

The web server 204 and portal 206 provide the means for a user within the issuer system 130 to interface and communicate with the payment card network 150 in order to operate a computer security device in accordance with embodiments of the present invention.

The issuer system 130 comprises an authorisation host server 250 arranged to process transaction authorisation request messages received from a merchant 120 via the acquirer 140 and payment card network 150. For the sake of clarity the merchant 120 and acquirer 140 are not shown in Figure 2.

In accordance with an embodiment of the present invention the issuer system 130 further comprises a web browser 252 which is arranged to communicate with the portal 206. The web browser is in communication with a computer security device 254 in accordance with an embodiment of the present invention. The device 254 may comprise or be hosted within a dedicated computer or server device or may be hosted by another computer or server device within the issuer system 130.

It is therefore noted that the issuer system 130 represents the transaction processing system that the computer security device assesses for security vulnerabilities.

The computer security device comprises the processor 255, input 257 and communications interface 259, as described in relation to Figure 2 for communicating with the authorisation host server 250 via the payment card network 150. The issuer system 130 may comprise a transaction device reader 261 which is in communication with the computer security device 254 via the input 257.

The payment card network 150 further comprises a back office computer system 260 and a database 262.

The operation of a computer security device 254 in accordance with an embodiment of the present invention is now described in conjunction with Figure 4.

In step 300 a user 301 at the issuer system 130 logs into the portal 206 via the web browser 252 and, in step 302, selects an option to download a computer security device program/application to a computer or server device within the issuer system 130.

It is noted that within Figure 4 and the following description a computer program is downloaded to and run within the local environment of the issuer system, the computer program comprising code that configures a computer or server device to operate as the computer security device of Figure 4. In alternative arrangements however the computer security device may be a dedicated hardware device. In further arrangements the computer security device may be hosted within the payment issuer network 150 and may be accessed remotely by the user 301.

In step 304, the computer security device program/application is installed within the issuer system 130 to provide the computer security device 254.

The potential security vulnerabilities of the issuer system 130 and in particular the host server 250 are then assessed in steps 306 to 330 as described below.

In step 306 a transaction device is read by the card reader 261 and data from the transaction device is received at the input 257 (It is noted that step 306 corresponds to step 10 in Figure 3). Further, the computer security device may exchange data with the transaction device and the processor may be arranged to communicate (via a further communications interface) with the transaction device in order to generate transaction data for use in generating the one or more transaction authorisation request messages (in such a further arrangement the input 257 may operate as the further communications interface).

In step 308 a test plan for testing security vulnerabilities (e.g. configuration vulnerabilities) of the host server 250 is built. This test plan may be generated in part by analysing the received transaction card data from step 306 since details of the applications and functionality supported by the transaction device will be indicative of the configuration of the host server 250. Additionally further configuration details may be supplied via the input 257 to the computer security device 254. In particular the user 301 may directly provide configuration details of the transaction processing system, e.g. in response to a request from the computer security device to provide such details.

Based on the received configuration details of the transaction processing system 130, the computer security device may be arranged to determine security vulnerability issues (one or more fraudulent transaction types) that transaction processing system 130 may be vulnerable to from a criminal entity. (It is noted that this step 308 corresponds to step 20 in Figure 3.)
For example, in the event that a transaction device with the transaction processing system 130 is configured for domestic transactions only, then the computer security device may be arranged to generate transaction authorisation request messages that emulate an international transaction in order test that the transaction is declined by the transaction processing system 130.

It is further noted that the computer security device may be arranged to suppress the generation of transaction authorisation messages that emulate fraudulent transaction types that the transaction processing system is already known not to detect. For example, if the transaction processing system is not configured to detect relay attacks then the computer security device may be configured such that it does not emulate transaction authorisation messages representing this type of attack. Additionally, there are a number of potential fraud scenarios where the fraudster attempts to make a terminal believe that a transaction device (card) has successfully verified an Offline PIN, while actually this is not the case. These scenarios may be covered by one or several test cases. However, if the card scanned for the purpose of building the test plan does not support Offline PIN, then such test cases may be discarded. Similarly, if the card does not implement specific countermeasures to relay attacks, there may be no need generating transactions featuring relay attack patterns, as clearly such patterns won't be spotted by the issuer host.

In step 310 the computer security device 254 generates one or more transaction authorisation request messages and, in step 312, outputs these messages to the issuer host server 150 via the communications interface 259. Such messages are routed via the web server 204 (step 312), enterprise service (step 314), communications network 200 (step 316) to the host server 250. The one or more transaction authorisation request messages are arranged to emulate the one or more fraudulent transaction types that have been identified in step 308.

The issuer host server 250 processes the received transaction authorisation request message in step 319 and generates an authorisation response message which is then routed back through the communications network 200 (step 320), enterprise server (step 322), web server 204 (step 324) back to the communications interface 259 in step 326. The web server is also arranged, in step 328, to store the received authorisation response messages in the database 262.

Once the authorisation response message(s) have been received by the computer security device 254, the processor 255 of the computer security device 254 may analyse, in step 330 (shown in Figure 3), the received authorisation response messages to identify the presence of any security issues in the transaction processing system. Such security issues may arise from configuration issues within the transaction processing system, incomplete system implementation issues or software coding issues.

The presence of such security issues may be determined by the fact that the transaction processing system has processed a transaction type incorrectly, has processed a transaction type that it is not meant to process (e.g. because it is not meant to be configured to process such transaction types or because the transaction request has reused previously submitted information) or has returned data within the response message that it is not meant to. Further transaction types that might be emulated are noted in the table below.

The computer security device 255 may be arranged to generate a report of the identified configuration issues that relate to security vulnerabilities along with suggested remedial action. This report may be output to an authorised representative of the transaction processing system or output 340 to the database 262. Reports may be generated and distributed in a wide variety of ways, ranging from a PDF file sent by email to a security dashboard accessible by authorized users on a corporate web site.

The processor may be arranged to generate a control signal 342 arranged to control the transaction control system such that transactions corresponding to security vulnerabilities are rejected until the configuration settings of the transaction processing system have been updated. In the event that the computer security device identifies a configuration issue at the transaction processing system, the computer security device may output a control signal 342 that blocks (rejects) any transactions that correspond to an identified security vulnerability.

It is noted that the transaction authorisation request messages generated by the processor in step 310 may be arranged to emulate one or more of: magnetic stripe transactions; magnetic stripe contactless transactions; EMV contact transactions; contactless transactions of card-not-present transactions. Additionally, the transaction authorisation request messages may be generated to mimic messages originating from different sources, e.g. the transaction authorisation request messages may be configured to look like they have originated from one or more of: an automatic cash machine (ATM); an attended point-of-sale (POS) terminal; an unattended POS terminal; a merchant website. The generated transaction authorisation request messages generated by the processor are arranged to emulate one of more of the following fraud patterns: counterfeit transaction device; wedge attacks; pre-play attacks; replay attacks; cross-contamination; fraudster-induced exception processing.

It is noted that in Figure 4 the authorisation response messages are returned to the computer security device 254 in step 326 so that the presence of security issues can be identified from these messages in step 330 (shown in Figure 3). In an alternative arrangement however the authorisation response messages may be received and analysed elsewhere (e.g. within a computer device in the payment card network 150). In such an arrangement the computer security device 254 may alternatively in step 326 receive a message instructing the next transaction authorisation request messages to be sent. The computer security device may also be sent a message instructing it to send an authorisation request message that does not emulate a fraud pattern in order to check that the transaction processing system is still up and running and has not, for instance, disabled the test account.

In an alternative arrangement to that shown in Figure 4, the computer security device 254 may be operated independently of the issuer system 130. In such an implementation the device 254 does not seek any direct input from the issuer regarding the configuration of the issuer system 130 and additionally does not use data generated by the issuer's cards or devices.

Instead, the device 254 may collect configuration data by analysing transactions that have been performed in the past by genuine cardholders and been routed through issuer's production environment (possibly through an international card network). In such an implementation the ability of the computer security device 254 to emulate fraud patterns is limited by:
- The amount of data (transactions) which can be observed on the network
- The inability to access live payment cards or payment devices, and therefore the inability to generate transactions requiring card/device-originated dynamic data.

As noted above the computer security device according to embodiments of the present invention may emulate a number of fraud patterns such as:
- counterfeit transaction device in which transaction device information is stolen in order to make a fake transaction device or in which the transaction device information is sold;
- wedge attacks in which an electronic device (a "wedge" or "skimming device") is used to record all the information contained within the magnetic strip of a transaction device;
- pre-play attacks in which an attacked prepares for an attack by carrying out a simulated transaction while pretending to be the transaction device to be attacked and then repeats the attack a second time with the real device when it is likely to carry out the same operations as in the simulation;
- replay attacks in which a valid transaction using a transaction device is attacked such that the data being transmitted is repeated or delayed;
- cross-contamination in which the radio frequency signal from an RFID enabled transaction device is sent in the same form as magnetic strip data in plain text and an attacker subsequently uses this data to create a magstripe card, re-encode an existing card or use the data in a cardholder-not-present transaction;
- fraudster-induced exception processing (in this fraudulent transaction type the aim of the fraudster is to "confuse" the transaction processing system by generating a transaction message that is not expected. The transaction processing system then moves into an error state where the transaction is approved. For example, the validation of chip-generated cryptograms typically uses as input a chip-provided key index indicating what cryptographic key the issuer host must use. If a valid key index is replaced with an invalid one, then an incorrectly programmed issuer host system could approve the transaction).

Further details, by way of examples of embodiments of the present invention, of several fraud types that the computer security device 254 may emulate are contained in Table 1 below.

**Table 1**

| **Fraud type** | **Fraud/Attack Vector Description** |
|---|---|
| Counterfeit | This attack vector replaces the Application Cryptogram of an EMV transaction with a randomly generated value |
| Fraudster-induced exception processing | This attack vector replaces the Key Derivation Index in the Issuer Application Data (tag 9F10) of an EMV transactionwith a different value |
| Replay | This attack vector replays the same transaction data in 2 consecutive authorization requests |
| Preplay | This attack vector performs an "out-of-band" authorization request for a EMV transaction, with the Application Transaction Counter (ATC) is higher than the highest ATC the host should accept |
| Cross-contamination | This attack vector sends transaction data for a contact EMV transaction in an authorization message identified as for a transaction performed over the contactless interface |
| Wedge device | This attack vector emulates a wedge device turning an EMV card into a yes-card accepting any Offline PIN, where the card detects and reports wedge presence |
| Lost & Stolen | This attack vector a transaction with Offline PIN counter exhausted, as reported by the terminal |
| Relay | This attack vector emulates a transaction where the relay resistance time limits have been exceeded |

The computer security device may be arranged to generate and output a report to the issuer summarising the results of the analysis of the issuer transaction system. The report may comprise:
- Finding Reference - a reference number may be assigned to the vulnerability in the report
- Criticality - The severity of the vulnerability may be categorised, e.g. into low vulnerability (where the security vulnerability has a low potential for fraud), medium vulnerability (e.g. where the security vulnerability has some potential for fraud but has not been exploited yet for large scale fraud) and high vulnerability (for security vulnerabilities that have significant and immediate potential for fraud)
- Bank identification numbers (BINs) affected - the BIN is the first four to six digits that appear on a transaction device and are associated with the issuer who issues a device. An issuer would have a range of BINs
- Summary - a short description of the vulnerability
- Background - the potential opportunity for fraud resulting from the vulnerability, if exploited, may be detailed P47039EP
- Remediation - Guidance on how the vulnerability should be addressed may be provided.

## Claims

1. A computer security device (254) for detecting security vulnerabilities in a transaction processing system (130), the device comprising:
an input (257) arranged to receive configuration data relating to the transaction processing system
a communications interface (259) arranged to output transaction authorisation request messages for processing by the transaction processing system and to receive authorisation response messages from the transaction processing system
a processor (255) arranged to:
analyse (308) the received configuration data relating to the transaction processing system and to determine one or more fraudulent transaction types that the transaction processing system is potentially vulnerable to due to the presence of configuration issues within the transaction processing system, the one or more determined fraudulent transaction types comprising one or more of: counterfeit transaction device; wedge attacks; pre-play attacks; replay attacks; cross-contamination; fraudster-induced exception processing;
generate (310) one or more transaction authorisation request messages to emulate one or more of the determined fraudulent transaction types;
output (312) the one or more generated transaction authorisation request messages via the communications interface to the transaction processing system;
analyse (330) any authorisation response messages from the transaction processing system received via the communications interface to identify the presence of security vulnerability issues in the transaction processing system
wherein the processor is arranged to analyse received authorization response messages by:
determining if the transaction processing system has processed a transaction type incorrectly; or,
determining if the transaction processing system has processed a transaction type that it is not meant to process; or
determining if the transaction processing system has returned data within the received authorization response message that it is not meant to return
and wherein the processor is arranged to generate a configuration control signal for controlling the transaction processing system, the control signal arranged to update configuration settings of the transaction processing system to remove an identified configuration issue and the communications interface is arranged to output the configuration control signal to the transaction processing system and wherein the processor is arranged to generate a control signal arranged to control the transaction control system such that transactions corresponding to the one or more determined fraudulent transaction types are rejected until the configuration settings of the transaction processing system have been updated.

2. A computer security device as claimed in Claim 1, wherein the processor (255) is arranged to analyse received authorisation response messages in order to determine if the transaction processing system is exposed to a potential fraud attack based on each emulated fraudulent transaction type.

3. A computer security device as claimed in Claim 1 or Claim 2, wherein the input (257) is arranged to receive data from a transaction device that has been read by a transaction device reader (261).

4. A computer security device as claimed in Claim 3, wherein the received data comprises data related to an Application Interchange Profile (AIP) or an Application Usage Control (AUC) associated with a transaction device.

5. A computer security device as claimed in Claim 3 or Claim 4, wherein the processor is arranged to determine transaction processing system functionality supported by the transaction device, such functionality being indicative of the configuration details of the transaction processing system.

6. A computer security device as claimed in any one of Claims 3 to 5, wherein the processor is arranged to use data generated by the transaction device to generate the one or more transaction authorisation request messages.

7. A computer security device as claimed in any one of Claims 3 to 6, further comprising a further communications interface arranged to exchange data with the transaction device and the processor is arranged to communicate with the transaction device in order to generate transaction data for use in generating the one or more transaction authorisation request messages.

8. A computer security device (254) as claimed in any preceding claim wherein the transaction authorisation request messages generated by the processor (255) are arranged to:
(i) emulate one or more of: magnetic stripe transactions; magnetic stripe contactless transactions; EMV contact transactions; contactless transactions **of** card-not-present transactions; and/or
(ii) mimic messages originating from one or more of: an automatic cash machine (ATM); an attended point-of-sale (POS) terminal; an unattended POS terminal; a merchant website.

9. A computer security device as claimed in any preceding claim, wherein the processor is arranged to construct a vulnerability assessment report based on analysed received authorisation response messages, the vulnerability report comprising all the identified configuration issues within the transaction processing system.

10. A computer security device as claimed in any preceding claim, wherein the processor is arranged to generate a request to the transaction processing system to supply historical transaction data that has been processed by the transaction processing system and the processor is arranged to generate one or more transaction authorisation request messages by modifying the received historical transaction data.

11. A method for detecting security vulnerabilities in a transaction processing system (130), the method comprising:
receiving (306) configuration data relating to the transaction processing system
analysing (308), in a processor, the received configuration data relating to the transaction processing system and determining one or more fraudulent transaction types that the transaction processing system is potentially vulnerable to due to the presence of configuration issues within the transaction processing system, the one or more determined fraudulent transaction types comprising one or more of: counterfeit transaction device; wedge attacks; pre-play attacks; replay attacks; cross-contamination; fraudster-induced exception processing ;
generating (310), in the processor, one or more transaction authorisation request messages emulating one or more of the determined fraudulent transaction types;
outputting (312) via the communications interface, the one or more generated transaction authorisation request messages to the transaction processing system;
receiving (326), via the communications interface, authorisation response messages from the transaction processing system;
analysing (330) received authorisation response messages to identify the presence of security vulnerability issues in the transaction processing system
wherein analysing received authorization response messages comprises one of:
determining if the transaction processing system has processed a transaction type incorrectly; or,
determining if the transaction processing system has processed a transaction type that it is not meant to process; or
determining if the transaction processing system has returned data within the received authorization response message that it is not meant to return
wherein the processor is arranged to generate a configuration control signal for controlling the transaction processing system, the control signal arranged to update configuration settings of the transaction processing system to remove an identified configuration issue and the communications interface is arranged to output the configuration control signal to the transaction processing system and wherein the processor is arranged to generate a control signal arranged to control the transaction control system such that transactions corresponding to the one or more determined fraudulent transaction types are rejected until the configuration settings of the transaction processing system have been updated.

12. A computer program comprising instructions which, when the program is executed by a computer, cause the computer to carry out the method of Claim 11.

13. A computer readable storage medium comprising instructions which, when executed by a computer, cause the computer to carry out the method of Claim 11.

## Patentansprüche

1. Computersicherheitsvorrichtung (254) zum Erkennen von Sicherheitsschwachstellen in einem Transaktionsverarbeitungssystem (130), wobei die Vorrichtung Folgendes umfasst:
einen Eingang (257), der eingerichtet ist, um Konfigurationsdaten zu empfangen, die sich das Transaktionsverarbeitungssystem beziehen
eine Kommunikationsschnittstelle (259), die eingerichtet ist, um Transaktionsautorisierungsanforderungsnachrichten zur Verarbeitung durch das Transaktionsverarbeitungssystem auszugeben und um Autorisierungsantwortnachrichten von dem Transaktionsverarbeitungssystem zu empfangen
einen Prozessor (255), der eingerichtet ist zum:
Analysieren (308) der empfangenen Konfigurationsdaten, die sich auf das Transaktionsverarbeitungssystem beziehen, und Ermitteln eines oder mehrerer Typen betrügerischer Transaktionen, für die das Transaktionsverarbeitungssystem aufgrund des Vorhandenseins von Konfigurationsproblemen innerhalb des Transaktionsverarbeitungssystems potenziell anfällig ist, wobei der eine oder die mehreren ermittelten Typen betrügerischer Transaktionen eines oder mehrere von Folgendem umfassen: gefälschte Transaktionsvorrichtung; Wedge-Angriffe, Pre-Play-Angriffe; Replay-Angriffe; Kreuzkontamination; betrügerinduzierte Ausnahmeverarbeitung;
Erzeugen (310) einer oder mehrerer Transaktionsautorisierungsanforderungsnachrichten, um einen oder mehrere der ermittelten Typen betrügerischer Transaktionen zu emulieren;
Ausgeben (312) der einen oder der mehreren erzeugten Transaktionsautorisierungsanforderungsnachrichten über die Kommunikationsschnittstelle an das Transaktionsverarbeitungssystem;
Analysieren (330) jeglicher von dem Transaktionsverarbeitungssystem über die Kommunikationsschnittstelle empfangenen Autorisierungsantwortnachrichten, um das Vorhandensein von Sicherheitsschwachstellenproblemen in dem Transaktionsverarbeitungssystem zu identifizieren
wobei der Prozessor eingerichtet ist, um die empfangenen Autorisierungsantwortnachrichten zu analysieren durch:
Ermitteln, ob das Transaktionsverarbeitungssystem einen Transaktionstyp falsch verarbeitet hat; oder,
Ermitteln, ob das Transaktionsverarbeitungssystem einen Transaktionstyp verarbeitet hat, den es nicht verarbeiten sollte; oder
Ermitteln, ob das Transaktionsverarbeitungssystem Daten in der empfangenen Autorisierungsantwortnachricht zurückgegeben hat, die es nicht zurückgeben sollte
und wobei der Prozessor eingerichtet ist, um ein Konfigurationssteuersignal zum Steuern des Transaktionsverarbeitungssystems zu erzeugen, wobei das Steuersignal eingerichtet ist, um Konfigurationseinstellungen des Transaktionsverarbeitungssystems zu aktualisieren, um ein identifiziertes Konfigurationsproblem zu beseitigen, und die Kommunikationsschnittstelle eingerichtet ist, um das Konfigurationssteuersignal an das Transaktionsverarbeitungssystem auszugeben, und wobei der Prozessor eingerichtet ist, um ein Steuersignal zu erzeugen, das eingerichtet ist, um das Transaktionssteuersystem so zu steuern, dass Transaktionen, die dem einen oder den mehreren ermittelten Typen betrügerischer Transaktionen entsprechen, zurückgewiesen werden, bis die Konfigurationseinstellungen des Transaktionsverarbeitungssystems aktualisiert worden sind.

2. Computersicherheitsvorrichtung nach Anspruch 1, wobei der Prozessor (255) eingerichtet ist, um empfangene Autorisierungsantwortnachrichten zu analysieren, um basierend auf jedem emulierten Typ betrügerischer Transaktionen zu ermitteln, ob das Transaktionsverarbeitungssystem einem potenziellen Betrugsangriff ausgesetzt ist.

3. Computersicherheitsvorrichtung nach Anspruch 1 oder Anspruch 2, wobei der Eingang (257) eingerichtet ist, um Daten von einer Transaktionsvorrichtung zu empfangen, die durch einen Transaktionsvorrichtungsleser (261) gelesen wurden.

4. Computersicherheitsvorrichtung nach Anspruch 3, wobei die empfangenen Daten Daten umfassen, die sich auf ein Anwendungsaustauschprofil (Application Interchange Profile, AIP) oder eine Anwendungsnutzungssteuerung (Application Usage Control, AUC) beziehen, die einer Transaktionsvorrichtung zugehörig sind.

5. Computersicherheitsvorrichtung nach Anspruch 3 oder Anspruch 4, wobei der Prozessor eingerichtet ist, um die durch die Transaktionsvorrichtung unterstützte Funktionalität des Transaktionsverarbeitungssystems zu ermitteln, wobei diese Funktionalität die Konfigurationsdetails des Transaktionsverarbeitungssystems angibt.

6. Computersicherheitsvorrichtung nach einem der Ansprüche 3 bis 5, wobei der Prozessor eingerichtet ist, um die durch die Transaktionsvorrichtung erzeugten Daten zu verwenden, um die eine oder die mehreren Transaktionsautorisierungsanforderungsnachrichten zu erzeugen.

7. Computersicherheitsvorrichtung nach einem der Ansprüche 3 bis 6, die ferner eine weitere Kommunikationsschnittstelle umfasst, die eingerichtet ist, um Daten mit der Transaktionsvorrichtung auszutauschen, und wobei der Prozessor eingerichtet ist, um mit der Transaktionsvorrichtung zu kommunizieren, um Transaktionsdaten zur Verwendung bei der Erzeugung der einen oder der mehreren Transaktionsautorisierungsanforderungsnachrichten zu erzeugen.

8. Computersicherheitsvorrichtung (254) nach einem der vorstehenden Ansprüche, wobei die durch den Prozessor (255) erzeugten Transaktionsautorisierungsanforderungsnachrichten eingerichtet sind zum:
(i) Emulieren eines oder mehrerer der folgenden Vorgänge: Magnetstreifentransaktionen, kontaktlose Magnetstreifentransaktionen, EMV-Kontakttransaktionen, kontaktlose Transaktionen von Karte-nicht-vorhanden-Transaktionen; und/oder
(ii) Nachahmen von Nachrichten, die von einem oder mehreren von Folgendem stammen: einem Geldautomaten (automatic cash machine, ATM), einem bedienten Kassenterminal, einem unbedienten Kassenterminal oder einer Händler-Website.

9. Computersicherheitsvorrichtung nach einem der vorstehenden Ansprüche, wobei der Prozessor eingerichtet ist, um basierend auf analysierten empfangenen Autorisierungsantwortnachrichten einen Schwachstellenbewertungsbericht zu erstellen, wobei der Schwachstellenbericht alle identifizierten Konfigurationsprobleme innerhalb des Transaktionsverarbeitungssystems umfasst.

10. Computersicherheitsvorrichtung nach einem der vorstehenden Ansprüche, wobei der Prozessor eingerichtet ist, um eine Anforderung an das Transaktionsverarbeitungssystem zu erzeugen, historische Transaktionsdaten zu liefern, die durch das Transaktionsverarbeitungssystem verarbeitet wurden, und der Prozessor eingerichtet ist, um eine oder mehrere Transaktionsautorisierungsanforderungsnachrichten zu erzeugen, indem er die empfangenen historischen Transaktionsdaten modifiziert.

11. Verfahren zum Erkennen von Sicherheitsschwachstellen in einem Transaktionsverarbeitungssystem (130), wobei das Verfahren Folgendes umfasst:
Empfangen (306) von Konfigurationsdaten, die sich auf das Transaktionsverarbeitungssystem beziehen
Analysieren (308), in einem Prozessor, der empfangenen Konfigurationsdaten, die sich auf das Transaktionsverarbeitungssystem beziehen, und Ermitteln eines oder mehrerer Typen betrügerischer Transaktionen, für die das Transaktionsverarbeitungssystem aufgrund des Vorhandenseins von Konfigurationsproblemen innerhalb des Transaktionsverarbeitungssystems potenziell anfällig ist, wobei der eine oder die mehreren ermittelten Typen betrügerischer Transaktionen eines oder mehrere von Folgendem umfassen: gefälschte Transaktionsvorrichtung; Wedge-Angriffe; Pre-Play-Angriffe; Replay-Angriffe; Kreuzkontamination; betrügerinduzierte Ausnahmeverarbeitung;
Erzeugen (310), in dem Prozessor, einer oder mehrerer Transaktionsautorisierungsanforderungsnachrichten, die einen oder mehrere der ermittelten Typen betrügerischer Transaktionen emulieren;
Ausgeben (312), über die Kommunikationsschnittstelle, der einen oder der mehreren erzeugten Transaktionsautorisierungsanforderungsnachrichten an das Transaktionsverarbeitungssystem;
Empfangen (326), über die Kommunikationsschnittstelle, von Autorisierungsantwortnachrichten von dem Transaktionsverarbeitungssystem;
Analysieren (330) empfangener Autorisierungsantwortnachrichten, um das Vorhandensein von Sicherheitsschwachstellenproblemen in dem Transaktionsverarbeitungssystem zu identifizieren
wobei das Analysieren empfangener Autorisierungsantwortnachrichten eines von Folgendem umfasst:
Ermitteln, ob das Transaktionsverarbeitungssystem einen Transaktionstyp falsch verarbeitet hat; oder,
Ermitteln, ob das Transaktionsverarbeitungssystem einen Transaktionstyp verarbeitet hat, den es nicht verarbeiten sollte; oder
Ermitteln, ob das Transaktionsverarbeitungssystem Daten in der empfangenen Autorisierungsantwortnachricht zurückgegeben hat, die es nicht zurückgeben sollte
wobei der Prozessor eingerichtet ist, um ein Konfigurationssteuersignal zum Steuern des Transaktionsverarbeitungssystems zu erzeugen, wobei das Steuersignal eingerichtet ist, um Konfigurationseinstellungen des Transaktionsverarbeitungssystems zu aktualisieren, um ein identifiziertes Konfigurationsproblem zu beseitigen, und die Kommunikationsschnittstelle eingerichtet ist, um das Konfigurationssteuersignal an das Transaktionsverarbeitungssystem auszugeben, und wobei der Prozessor eingerichtet ist, um ein Steuersignal zu erzeugen, das eingerichtet ist, um das Transaktionssteuersystem so zu steuern, dass Transaktionen, die dem einen oder den mehreren ermittelten Typen betrügerischer Transaktionen entsprechen, zurückgewiesen werden, bis die Konfigurationseinstellungen des Transaktionsverarbeitungssystems aktualisiert worden sind.

12. Computerprogramm, das Anweisungen umfasst, die bei Ausführung des Programms durch einen Computer bewirken, dass der Computer das Verfahren nach Anspruch 11 durchführt.

13. Computerlesbares Speicherungsmedium, das Anweisungen umfasst, die bei Ausführung durch einen Computer bewirken, dass der Computer das Verfahren nach Anspruch 11 durchführt.

## Revendications

1. Dispositif de sécurité informatique (254) destiné à détecter des vulnérabilités de sécurité dans un système de traitement de transaction (130), le dispositif comprenant :
une entrée (257) agencée pour recevoir des données de configuration relatives au système de traitement de transaction
une interface de communications (259) agencée pour fournir en sortie des messages de demande d'autorisation de transaction pour un traitement par le système de traitement de transaction et pour recevoir des messages de réponse d'autorisation à partir du système de traitement de transaction
un processeur (255) agencé pour :
analyser (308) les données de configuration reçues relatives au système de traitement de transaction et déterminer un ou plusieurs types de transactions frauduleuses auxquels le système de traitement de transaction est potentiellement vulnérable en raison de la présence de problèmes de configuration au sein du système de traitement de transaction, les un ou plusieurs types de transactions frauduleuses déterminés comprenant un ou plusieurs parmi : un dispositif de transaction de contrefaçon ; des attaques dites « wedge » ; des attaques par pré-jeu ; des attaques par rejeu ; une contamination croisée ; un traitement exceptionnel induit par fraudeur ;
générer (310) un ou plusieurs messages de demande d'autorisation de transaction pour émuler un ou plusieurs des types de transactions frauduleuses déterminés ;
fournir en sortie (312) les un ou plusieurs messages de demande d'autorisation de transaction générés via l'interface de communications au système de traitement de transaction ;
analyser (330) tout message de réponse d'autorisation à partir du système de traitement de transaction reçu via l'interface de communications pour identifier la présence de problèmes de vulnérabilité de sécurité dans le système de traitement de transaction
dans lequel le processeur est agencé pour analyser les messages de réponse d'autorisation reçus par :
le fait de déterminer si le système de traitement de transaction a traité un type de transaction de manière incorrecte ; ou,
le fait de déterminer si le système de traitement de transaction a traité un type de transaction qu'il n'est pas fait pour traiter ; ou
le fait de déterminer si le système de traitement de transaction a renvoyé des données au sein du message de réponse d'autorisation reçu qu'il n'est pas fait pour renvoyer
et dans lequel le processeur est agencé pour générer un signal de commande de configuration destiné à commander le système de traitement de transaction, le signal de commande étant agencé pour actualiser des réglages de configuration du système de traitement de transaction pour éliminer un problème de configuration identifié et l'interface de communications est agencée pour fournir en sortie le signal de commande de configuration au système de traitement de transaction et dans lequel le processeur est agencé pour générer un signal de commande agencé pour commander le système de commande de transaction de sorte que des transactions correspondant aux un ou plusieurs types de transactions frauduleuses déterminés sont rejetées jusqu'à l'actualisation des réglages de configuration du système de traitement de transaction.

2. Dispositif de sécurité informatique selon la revendication 1, dans lequel le processeur (255) est agencé pour analyser des messages de réponse d'autorisation reçus afin de déterminer si le système de traitement de transaction est exposé à une attaque de fraude potentielle sur la base de chaque type de transaction frauduleuse émulé.

3. Dispositif de sécurité informatique selon la revendication 1 ou la revendication 2, dans lequel l'entrée (257) est agencée pour recevoir des données à partir d'un dispositif de transaction qui a été lu par un lecteur de dispositif de transaction (261).

4. Dispositif de sécurité informatique selon la revendication 3, dans lequel les données reçues comprennent des données relatives à un profil d'échange d'application (AIP) ou à un suivi d'utilisation d'application (AUC) associé à un dispositif de transaction.

5. Dispositif de sécurité informatique selon la revendication 3 ou la revendication 4, dans lequel le processeur est agencé pour déterminer une fonctionnalité de système de traitement de transaction prise en charge par le dispositif de transaction, une telle fonctionnalité étant indicative des détails de configuration du système de traitement de transaction.

6. Dispositif de sécurité informatique selon l'une quelconque des revendications 3 à 5, dans lequel le processeur est agencé pour utiliser des données générées par le dispositif de transaction pour générer les un ou plusieurs messages de demande d'autorisation de transaction.

7. Dispositif de sécurité informatique selon l'une quelconque des revendications 3 à 6, comprenant en outre une autre interface de communications agencée pour échanger des données avec le dispositif de transaction et le processeur est agencé pour communiquer avec le dispositif de transaction afin de générer des données de transaction pour une utilisation dans la génération des un ou plusieurs messages de demande d'autorisation de transaction.

8. Dispositif de sécurité informatique (254) selon l'une quelconque des revendications précédentes dans lequel les messages de demande d'autorisation de transaction générés par le processeur (255) sont agencés pour :
(i) émuler les unes ou plus parmi : des transactions par bande magnétique ; des transactions sans contact par bande magnétique ; des transactions avec contact EMV ; des transactions sans contact de transactions sans présence de carte ; et/ou
(ii) imiter des messages provenant d'un ou de plusieurs parmi : un distributeur automatique de billets (DAB) ; un terminal de point de vente (POS) visité ; un terminal de POS non visité ; un site Web marchand.

9. Dispositif de sécurité informatique selon l'une quelconque des revendications précédentes, dans lequel le processeur est agencé pour élaborer un rapport d'évaluation de vulnérabilité sur la base de messages de réponse d'autorisation reçus analysés, le rapport de vulnérabilité comprenant l'ensemble des problèmes de configuration identifiés au sein du système de traitement de transaction.

10. Dispositif de sécurité informatique selon l'une quelconque des revendications précédentes, dans lequel le processeur est agencé pour générer une demande adressée au système de traitement de transaction pour fournir un historique de données de transaction qui ont été traitées par le système de traitement de transaction et le processeur est agencé pour générer un ou plusieurs messages de demande d'autorisation de transaction par modification de l'historique de données de transaction reçu.

11. Procédé de détection de vulnérabilités de sécurité dans un système de traitement de transaction (130), le procédé comprenant :
la réception (306) de données de configuration relatives au système de traitement de transaction
l'analyse (308), dans un processeur, des données de configuration reçues relatives au système de traitement de transaction et la détermination d'un ou de plusieurs types de transactions frauduleuses auxquels le système de traitement de transaction est potentiellement vulnérable en raison de la présence de problèmes de configuration au sein du système de traitement de transaction, les un ou plusieurs types de transactions frauduleuses déterminés comprenant un ou plusieurs parmi : un dispositif de transaction de contrefaçon ; des attaques dites « wedge » ; des attaques par pré-jeu ; des attaques par rejeu ; une contamination croisée ; un traitement exceptionnel induit par fraudeur ;
la génération (310), dans le processeur, d'un ou de plusieurs messages de demande d'autorisation de transaction émulant un ou plusieurs des types de transactions frauduleuses déterminés ;
la fourniture en sortie (312), via l'interface de communications, des un ou plusieurs messages de demande d'autorisation de transaction générés au système de traitement de transaction ;
la réception (326), via l'interface de communications, de messages de réponse d'autorisation à partir du système de traitement de transaction ;
l'analyse (330) de messages de réponse d'autorisation reçus pour identifier la présence de problèmes de vulnérabilité de sécurité dans le système de traitement de transaction
dans lequel l'analyse de messages de réponse d'autorisation reçus comprend un ou plusieurs parmi :
le fait de déterminer si le système de traitement de transaction a traité un type de transaction de manière incorrecte ; ou,
le fait de déterminer si le système de traitement de transaction a traité un type de transaction qu'il n'est pas fait pour traiter ; ou
le fait de déterminer si le système de traitement de transaction a renvoyé des données au sein du message de réponse d'autorisation reçu qu'il n'est pas fait pour renvoyer
dans lequel le processeur est agencé pour générer un signal de commande de configuration destiné à commander le système de traitement de transaction, le signal de commande étant agencé pour actualiser des réglages de configuration du système de traitement de transaction pour éliminer un problème de configuration identifié et l'interface de communications est agencée pour fournir en sortie le signal de commande de configuration au système de traitement de transaction et dans lequel le processeur est agencé pour générer un signal de commande agencé pour commander le système de commande de transaction de sorte que des transactions correspondant aux un ou plusieurs types de transactions frauduleuses déterminés sont rejetées jusqu'à l'actualisation des réglages de configuration du système de traitement de transaction.

12. Programme informatique comprenant des instructions qui, lorsque le programme est exécuté par un ordinateur, amènent l'ordinateur à effectuer le procédé de la revendication 11.

13. Support de stockage lisible par ordinateur comprenant des instructions qui, lorsqu'elles sont exécutées par un ordinateur, amènent l'ordinateur à effectuer le procédé de la revendication 11.
